(19) Europäisches Patentamt
European Patent Office
Office européen des brevets

(11) **EP 3 882 433 B1**

(12) **EUROPÄISCHE PATENTSCHRIFT**

(45) Veröffentlichungstag und Bekanntmachung des Hinweises auf die Patenterteilung:
**18.12.2024 Patentblatt 2024/51**

(21) Anmeldenummer: **21162586.8**

(22) Anmeldetag: **15.03.2021**

(51) Internationale Patentklassifikation (IPC):
*E21B 43/12* (2006.01)          *G01F 1/34* (2006.01)
*G01F 1/50* (2006.01)          *F04D 13/16* (2006.01)
*F04D 15/00* (2006.01)

(52) Gemeinsame Patentklassifikation (CPC):
**G01F 1/34; F04D 13/16; F04D 15/0088; G01F 1/50**

(54) **PUMPWERK MIT INTEGRIERTEM DURCHFLUSSZÄHLER**

PUMPING MECHANISM WITH INTEGRATED FLOW METER

STATION DE POMPAGE POURVUE DE DÉBITMÈTRE INTÉGRÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2020 DE 102020107486**

(43) Veröffentlichungstag der Anmeldung:
**22.09.2021 Patentblatt 2021/38**

(73) Patentinhaber: **Lutz Pumpen GmbH**
**97877 Wertheim (DE)**

(72) Erfinder: **Getze, Andrej**
**97892 Wertheim (DE)**

(74) Vertreter: **Christ, Niko**
**Geitz Patentanwälte PartG mbB**
**Obere Wässere 3-7**
**72764 Reutlingen (DE)**

(56) Entgegenhaltungen:
EP-A1- 3 567 256          EP-B1- 3 187 735
CA-A1- 2 633 204          CA-C- 2 633 204
DE-A1- 102016 225 408          DE-A1- 102017 121 778
DE-U1- 202004 021 162          US-A1- 2018 087 496

EP 3 882 433 B1

**Beschreibung**

Die vorliegende Erfindung betrifft ein Pumpwerk, umfassend ein Pumpenrohr und eine Steuereinheit zur Bestimmung des Durchflusses, wobei dem Pumpwerk wenigstens ein Drucksensor zugeordnet ist, welcher Sensordaten an die Steuereinheit übermittelt.

Ein solches Pumpwerk ist bereits aus der CA 2 633 204 A1 vorbekannt, welches eine Ölpumpe zur Erdölförderung betrifft. Mithilfe eines Drucksensors in der Pumpleitung wird dort eine Druckmessung umgesetzt. Weiter ist auf die Schriften DE 10 2017 121778 A1, EP 3 567 256 A1 und DE 10 2016 225408 A1 zu verweisen. Auch ist in diesem Zusammenhang die DE 20 16 175 A vorbekannt. Dort wird mit einer Messblende gearbeitet, vor und nach welcher eine Druckmessung vorgenommen wird. Aus der Druckdifferenz der beiden Messungen kann auf den Durchfluss zurückgeschlossen werden.

Regelmäßig ist es wichtig, einen Überblick darüber zu behalten, welche Mengen eines zu fördernden Mediums mithilfe einer Pumpe, insbesondere einer Behälterpumpe, gefördert worden sind. Für viele Anwendungen ist dies zu Zwecken einer geeigneten Dosierung, für andere Anwendungen zur Abrechnung bestimmter Mengen abgegebenen Mediums erforderlich. Hierbei verhält es sich derzeit so, dass die Bestimmung des Durchflusses mit einem separaten externen Durchflussmessgeräts erfolgen muss, da integrierte Durchflusszähler bislang nicht bekannt sind.

Anders verhält es sich bei Verdrängermaschinen, bei denen allein aufgrund der Drehzahl des Motors eine Menge verdrängt und damit auf das geförderte Medium zurückgeschlossen werden kann. Daher können Verdrängermaschinen auch im Stand der Technik leicht ohne externe Messgeräte auskommen und erlauben dennoch über die Drehzahl und die Zeit eine vergleichsweise exakte Abschätzung des Durchflusses.

Vor diesem Hintergrund liegt der vorliegenden Erfindung die Aufgabe zu Grunde, ein Pumpwerk für eine Behälterpumpe zu schaffen, welches ohne externe Messgeräte und ohne den Einbau einer Messblende eine Erfassung des umgesetzten Mediendurchflusses ermöglicht.

Gelöst wird diese Aufgabe durch ein Pumpwerk für eine Behälterpumpe gemäß den Merkmalen des unabhängigen Anspruchs 1. Sinnvolle Ausgestaltungen solcher Behälterpumpen können den sich jeweils anschließenden, abhängigen Ansprüchen entnommen werden.

Erfindungsgemäß ist es vorgesehen, dass ein Pumpwerk für eine Behälterpumpe ein Pumpenrohr umfasst, über welches mithilfe eines Pumpenrotors aufgrund der Betätigung durch einen aufgesetzten Pumpenantrieb ein Medium aus einem Behälter gefördert werden kann. Am oberen Ende des Pumpenrohrs befindet sich ein Auslaufstutzen, über welchen das anstehende Medium abgegeben werden kann, insbesondere über einen angeschlossenen Förderschlauch, der bedarfsweise mit einer Zapfeinrichtung abgeschlossen sein kann. Um auf ein externes Messgerät zur Ermittlung des Durchflusses verzichten zu können, weist das Pumpwerk wenigstens einen Drucksensor auf, mit dessen Hilfe die Druckverhältnisse innerhalb des Pumpwerks erfasst werden können. Dies kann in dem Pumpenrohr oder in dem Auslaufstutzen, oder im Falle der Verwendung mehrerer Drucksensoren auch an beiden Orten erfolgen.

Insbesondere kann bei bekannten Motorparametern und Parametern des zu fördernden Mediums eine Bestimmung des Durchflusses mithilfe der Formel

$$\dot{V}_{th} = K_1(\eta, \rho) \cdot p + c \cdot K_2(\eta, \rho)$$

erfolgen, wobei $K_1(\eta, \rho)$ ein Korrekturfaktor in Abhängigkeit von der Viskosität und der Dichte, und $K_2(\eta, \rho)$ ein Korrekturfaktor für den maximalen Volumenstrom ist, sowie p der gemessene Druck und c der Achsenabschnitt des maximalen Volumenstroms.

Um die benötigten Parameter zu erhalten, weist die Steuereinheit des Pumpwerks ein Interface zu einer Motorsteuerung auf, welche einen mit dem Pumpwerk verbundenen Motor steuert. Insbesondere kann hierüber ein Aufschluss über die Drehzahl, mit welcher der Motor betrieben wird, seine Leistungsaufnahme oder bedarfsweise auch weitere Parameter erlangt werden.

Ferner ist eine Entgegennahme von Parametern des zu fördernden Mediums vorgesehen, die in einer ersten Variante direkt vom Benutzer über eine Eingabeschnittstelle eingegeben werden können. Es ist jedoch ebenfalls möglich, die Daten über andere Mittel in das System zu laden, so etwa über einen Barcode, der an einem Behälter des Mediums angeordnet ist. Durch ein Aufrufen eines solchen Barcodes kann die Steuereinheit, gegebenenfalls unter Rückgriff auf eine Datenbank oder einen Speicher in einem lokalen oder weltweiten Netzwerk, die benötigten Daten des zu fördernden Mediums abrufen.

Die vorstehend beschriebene Erfindung wird im Folgenden anhand eines Ausführungsbeispiels näher erläutert.

Es zeigt

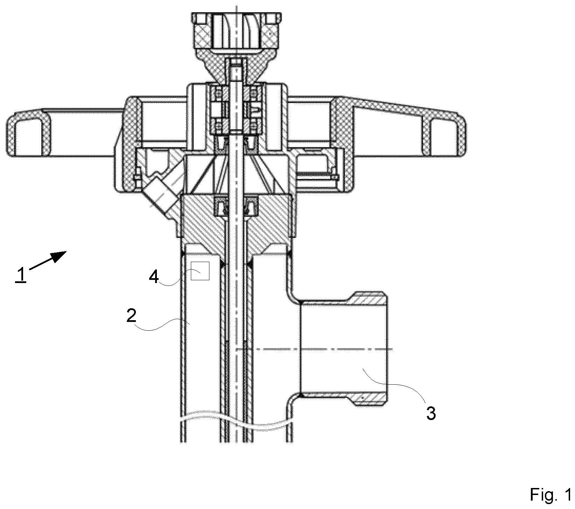

Figur 1    ein Pumpwerk mit einem Drucksensor in einer seitlichen Querschnittsdarstellung.

Figur 1 zeigt ein Pumpwerk 1, welches vereinfacht aus einem Pumpenrohr 2 und einem Auslaufstutzen 3 hergestellt ist. Der Auslaufstutzen 3 ist seitlich auf das Pumpenrohr 2 aufgesetzt und leitet das vermittels eines Fördermotors aufwärts geförderte Medium seitlich von dem Pumpenrohr 2 weg in eine hier nicht dargestellte Schlauchleitung.

Um auf die Verwendung eines externen Messgeräts zu verzichten, soll nunmehr gemäß der Erfindung in dem Pumpwerk 1 selbst eine Durchflussmessung stattfinden, mit der die durch das Pumpwerk strömende Menge an zu förderndem Medium bestimmt und erfasst werden kann. Hierzu weist das Pumpwerk 1 einen Drucksensor 4 auf, welcher in seinem Bereich den Druck erfasst. Zusätzlich wird neben dem Drucksensor 4 eine anderweitige Beibringung von Parametern von außen benötigt. Diese erfolgt über ein nicht gezeigtes Interface zu dem angeschlossenen Motor, aus welchem dessen Drehzahlverlauf und dessen Leistungsaufnahme über die Zeit ausgelesen werden kann. Ebenfalls werden weitere Parameter der zu fördernden Flüssigkeit mittels eines weiteren Interfaces abgefragt, wobei es sich um ein Eingabemittel oder einen Barcodescanner zur Aufzeichnung und Auswertung eines Barcodes eines Produktetiketts handeln kann. Über eine Datenbank kann die Steuereinheit mit diesen zusätzlichen Informationen benötigte Parameter aus einem Speicher laden und anhand dieser Daten die Berechnung des Durchflusses ebenfalls vornehmen.

Vorstehend beschrieben ist somit ein Pumpwerk für eine Behälterpumpe, welches ohne externe Messgeräte eine Erfassung des umgesetzten Mediendurchflusses ermöglicht.

## BEZUGSZEICHENLISTE

1   Pumpwerk
2   Pumpenrohr
3   Auslaufstutzen
4   Drucksensor

## Patentansprüche

1. Pumpwerk, umfassend ein Pumpenrohr (2) und eine Steuereinheit, wobei dem Pumpwerk (1) wenigstens ein Drucksensor (4) zugeordnet ist, welcher Sensordaten an die Steuereinheit übermittelt, **dadurch gekennzeichnet, dass** es sich um ein Pumpwerk (1) für eine Behälterpumpe handelt, welches einen von dem Pumpenrohr (2) abzweigenden Auslaufstutzen (3) umfasst und der wenigstens eine Drucksensor (4) dem Pumpenrohr (2) und/oder dem Auslaufstutzen (3) inwendig zugeordnet ist, wobei die Steuereinheit zur Bestimmung des Durchflusses geeignet ist und der Steuereinheit Mittel zur Erfassung von Motorparametern eines mit dem Pumpwerk (1) verbundenen Motors sowie Mittel zur Erfassung von Medienparametern des mit dem Pumpwerk (1) geförderten Mediums zuordnet sind, wobei die Bestimmung des Durchflusses mithilfe der Sensordaten des Drucksensors, der Motorparametern und der Parametern des zu fördernden Mediums erfolgt.

2. Pumpwerk gemäß Anspruch 1, **dadurch gekennzeichnet, dass** es sich bei den Mitteln zur Erfassung von Motorparametern um ein Interface zur Kommunikation mit einer Motorsteuerung handelt.

3. Pumpwerk gemäß einem der Ansprüche 1 oder 2, **dadurch gekennzeichnet, dass** es sich bei den Mitteln zur Erfassung von Medienparametern um Eingabemittel zur Eingabe oder Auswahl von Parametern durch einen Benutzer handelt.

4. Pumpwerk gemäß einem der Ansprüche 1 oder 2, **dadurch gekennzeichnet, dass** es sich bei den Mitteln zur Erfassung von Medienparametern um optische Erfassungsmittel, insbesondere um einen Barcodescanner, handelt.

## Claims

1. Pumping mechanism comprising a pump tube (2) and a control unit, the pumping mechanism (1) being assigned at least one pressure sensor (4) which transmits sensor data to the control unit,

   **characterized in that** it is a pumping mechanism (1) for a container pump and comprises an outlet nozzle (3) that branches off from the pump tube (2), and the at least one pressure sensor (4) is internally assigned to the pump tube (2) and/or the outlet nozzle (3), the control unit being suitable for determining the flow rate and the control unit being assigned means for recording motor parameters of a motor connected to the pumping mechanism (1) as well as means for recording media parameters of the medium conveyed by the pumping mechanism (1), the flow rate being determined using the sensor data from the pressure sensor, the motor parameters and the parameters of the medium to be conveyed.

2. Pumping mechanism according to claim 1, **characterized in that** the means for recording motor parameters is an interface for communicating with a motor controller.

3. Pumping mechanism according to either of claims 1 or 2, **characterized in that** the means for recording media parameters are input means for the input or selection of parameters by a user.

4. Pumping mechanism according to either of claims 1 or 2, **characterized in that** the means for recording media parameters are optical recording means, in particular a barcode scanner.

**Revendications**

1. Station de pompage, comprenant un tube de pompe (2) et une unité de commande, dans laquelle au moins un capteur de pression (4) est associé à la station de pompage (1), lequel transmet des données de capteur à l'unité de commande,

   **caractérisée en ce qu'**il s'agit d'une station de pompage (1) pour une pompe submersible, laquelle station de pompage comprend une tubulure de sortie (3) partant du tube de pompe (2) et l'au moins un capteur de pression (4) est associé à l'intérieur au tube de pompe (2) et/ou à la tubulure de sortie (3), dans laquelle l'unité de commande est adaptée pour déterminer le débit et des moyens permettant de détecter des paramètres de moteur d'un moteur relié à la station de pompage (1) ainsi que des moyens permettant de détecter des paramètres de fluide du fluide transporté par la station de pompage (1) sont associés à l'unité de commande,
   dans laquelle la détermination du débit est effectuée à l'aide des données de capteur du capteur de pression, des paramètres de moteur et des paramètres du fluide à transporter.

2. Station de pompage selon la revendication 1, **caractérisée en ce que** les moyens permettant de détecter des paramètres de moteur sont une interface pour la communication avec une commande de moteur.

3. Station de pompage selon l'une des revendications 1 ou 2,
   **caractérisée en ce que** les moyens permettant de détecter des paramètres de fluide sont des moyens de saisie pour la saisie ou la sélection de paramètres par un utilisateur.

4. Station de pompage selon l'une des revendications 1 ou 2,
   **caractérisée en ce que** les moyens permettant de détecter des paramètres de fluide sont des moyens de détection optique, en particulier un scanner de codes à barres.

Fig. 1

**IN DER BESCHREIBUNG AUFGEFÜHRTE DOKUMENTE**

**In der Beschreibung aufgeführte Patentdokumente**

- CA 2633204 A1
- DE 102017121778 A1
- EP 3567256 A1
- DE 102016225408 A1
- DE 2016175 A